# EUROPÄISCHE PATENTSCHRIFT

(11) **EP 0 639 435 B1**
(45) Veröffentlichungstag und Bekanntmachung des Hinweises auf die Patenterteilung: **29.10.1997**
(21) Anmeldenummer: 94110992.8
(22) Anmeldetag: 14.07.1994
(51) Int. Cl.: B28B 1/26, B28B 1/24, B29C 45/67, B29C 45/66, B30B 1/00, B30B 1/26, B30B 15/00

(54) **Presse zum Druckgiessen keramischer Formlinge**
Press for moulding under pressure ceramic articles
Presse pour le coulage sous pression d'objets en céramique

(30) Priorität: 16.08.1993 DE 9312232 U
(43) Veröffentlichungstag der Anmeldung: 22.02.1995
(73) Patentinhaber: Dorst-Maschinen-und Anlagenbau Otto Dorst und Dipl.-Ing Walter Schlegel GmbH & Co., D-82431 Kochel (DE)
(72) Erfinder: Spanner, Hermann, D-83673 Bichl (DE)
(74) Vertreter: Bockhorni, Josef, Dipl.-Ing.

(56) Entgegenhaltungen:
- AU-A- 7 129 115
- BE-A- 441 772
- DE-A- 2 721 081
- DE-C- 904 622
- FR-A- 1 474 889
- FR-A- 1 601 688
- GB-A- 871 827
- US-A- 3 356 130
- PATENT ABSTRACTS OF JAPAN vol. 14, no. 121 (M-0946) 7. März 1990 & JP-A-01 317 715 (FANUC LTD) 22. Dezember 1989

## Beschreibung

Die Erfindung betrifft eine Presse gemäß dem Oberbegriff des Anspruches 1.

Bei Pressen zur Herstellung keramischer Formlinge werden die auf den Preßplatten angeordneten Formelemente der Gießform in eine Schließstellung gefahren, in der Schlicker in die Gießform unter Druck eingebracht wird. Aus diesem Grund muß zur Kompensierung des sich in der Gießform aufbauenden Gegendrucks über den Schlicker eine Schließkraft während des Formvorgangs aufgebracht werden, so daß ein entsprechend dichtes Anliegen der die Gießform bildenden Formelemente gewährleistet ist. Überwiegend erfolgen die Zustellbewegungen der Druckgußpressen über pneumatische oder hydraulische Zylinder, was jedoch aufgrund der beim Druckgießen auftretenden Kräfteverhältnisse eine aufwendige Hydraulik erfordert (siehe z.B. die US-A-3 356 310).

Aufgabe der Erfindung ist es, eine einfach aufgebaute Presse zu schaffen, die ohne aufwendige Hydraulik auskommt, leise und energiesparend arbeitet und gleichwohl eine einwandfreie Herstellung der Formlinge durch Druckgießen ermöglicht.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung wird eine der Preßplatten über einen Kurbeltrieb in die Schließstellung bewegt, wobei die Preßplatte in der gestreckten Lage des Kurbeltriebs genau positioniert ist, so daß die Kräfte über den gestreckten Kurbeltrieb in die Presse abgeleitet werden können. Dadurch ergibt sich eine einfache Steuerung der Presse in die Schließstellung. Die beim Druckgießen erforderliche Schließkraft wird über einen Kurzhubzylinder aufgebracht, der zwischen einer Stellspindel für die zweite Preßplatte und der Preßplatte angeordnet ist. Hierbei ist es zweckmäßig, daß der Kurzhubzylinder so konzipiert ist, daß er bei jedem Zyklus auf Endanschlag gefahren wird. In Verbindung mit einer Stellspindel mit digitaler Positionsanzeige wird bei diesen Druckgußmaschinen gewährleistet, daß die Kunststofform immer eine maßlich genau definierte Vorspannung zum Abdichten bekommt. Daraus resultiert eine besonders formschonende Arbeitsweise, was für die aufwendigen Formelemente einer Gießform sehr wesentlich ist. Zugleich dient die Stellspindel zum Ausgleich unterschiedlicher Formendicken. Die Schlickerdruckerzeugung selbst erfolgt mit einem pneumatischen/hydraulischen Druckübersetzer.

Nachfolgend wird ein bevorzugtes Ausführungsbeispiel der Druckgußpresse anhand der einzigen Figur beschrieben, die eine Seitenansicht der Presse zeigt:

Die Presse weist zwei gegenüberliegend angeordnete vertikale Ständer oder Rahmen 1 und 2 auf, die miteinander durch eine hier nicht näher beschriebene Führung 3 portalartig verbunden sind. Auf der Führung 3 sind zwei Schlitten 4 und 5 angeordnet, die über nicht dargestellte Rollen längs der Führung 3 zwischen den Ständern 1 und 2 verfahrbar sind. An jedem Schlitten 4 und 5 ist eine Pressenplatte 6 und 7 hängend angeordnet und vorzugsweise starr mit dem zugehörigen Schlitten 4, 5 verbunden. Die Preßplatten 6 und 7 tragen in üblicherweise Aufspanplatten zur Aufnahme der die Gießform bildenden Formelemente, die gleichfalls nicht näher dargestellt sind.

Die Preßplatte 6 ist in Schließstellung durch einen allgemein mit 8 bezeichneten Kurbeltrieb bewegbar, der durch einen Elektromotor 9 angetrieben ist. Die Kurbel 10 des Kurbeltriebs 8 ist hierbei drehfest mit dem Zapfen 11 verbunden, läuft also um die Achse des Zapfens 11 und ist über ein Gelenk 12 mit der Pleuelstange 13 verbunden, die wiederum über ein Gelenk 14 an der Rückseite der Preßplatte 6 angreift. Im dargestellten Ausführungsbeispiel ist der Kurbeltrieb 8 am linken Ständer 1 aufgenommen, bewegt also die Preßplatte 6 in die Schließstellung und aus dieser heraus. Die gegenüberliegend angeordnete Preßplatte 7 ist durch eine im rechten Ständer 2 verlagerte Stellspindel 15 bewegbar, wobei die Stellspindel über eine Handkurbel 16 manuell betätigt werden kann. Zwischen der Stellspindel 15 und der Preßplatte 7 ist ein Kurzhubzylinder 17 angeordnet, der die Schließkraft für die Presse aufbringt und von einem pneumatischen/hydraulischen Druckübersetzer versorgt ist.

Der Kurzhubzylinder ist hierbei so konzipiert, daß er bei jedem Zyklus auf Endanschlag gefahren werden kann. Die Stellspindel 15 weist eine digitale Positionsanzeige auf.

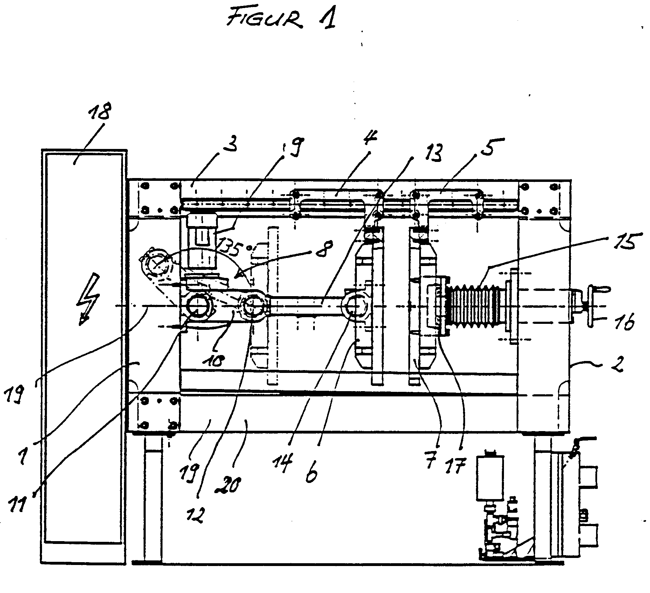

In der Fig. 1 ist schließlich links der Schaltkasten 18 der Presse dargestellt. Ferner sind im dargestellten Ausführungsbeispiel die beiden Ständer 1 und 2 bzw. Rahmen 1 und 2 durch eine untere Traverse 20 verbunden, so daß die beiden Preßplatten 6 und 7 in einem Rechteckrahmen aufgenommen sind.

Nach Entnahme eines Formlings wird die Presse in Schließstellung gefahren, indem die Preßplatte 6 durch den Kurbeltrieb 8 in die durch vollausgezogene Linien dargestellte Position gefahren wird. In dieser Schließstellung befindet sich der Kurbeltrieb in der gestreckten Lage, in der die genaue Positionierung gegeben ist. Hierbei sind Kurbeltrieb, Kurzhubzylinder und Stellspindel längs einer Achse 19 ausgerichtet, die parallel mit der Führung 3 für die Schlitten 4 und 5 verläuft. Nach Positionierung der Stellspindel 15 wird die Schließkraft durch den Kurzhubzylinder aufgebracht, der hierbei auf Endanschlag gefahren wird. Die Schlickerdruckerzeugung erfolgt mit einem pneumatischen/hydraulischen Druckübersetzer, der in der Zeichnung unten rechts dargestellt ist. In strichpunktierter Darstellung ist der Kurbeltrieb in einer zurückgefahrenen Stellung gezeigt.

## Patentansprüche

1. Presse zum Druckgießen keramischer Formlinge, insbesondere Geschirrteile und dgl., mit längs einer Achse (19) relativ zueinander in Schließstellung verfahrbaren, gegenüberliegend angeordneten Preßplatten (6, 7), die jeweils auf einem Schlitten (4, 5) angeordnet sind, welche (4, 5) längs einer zur Achse (19) parallelen Führung (3) verfahrbar sind, **dadurch gekennzeichnet, daß** für die Schließbewegung der Presse ein elektromotorisch angetriebener Kurbeltrieb (8) vorgesehen ist, dessen Pleuelstange (13) an einer Preßplatte (6) angreift, und daß die andere Preßplatte (7) durch eine Stellspindel (15) bewegbar ist, wobei zwischen der Stellspindel (15) und der dazugehörigen Preßplatte (7) ein Kurzhubzylinder (17) zur Erzeugung der Schließkraft der Presse angeordnet ist.

2. Presse nach Anspruch 1, **dadurch gekennzeichnet, daß** in der Schließstellung der Presse die mit dem Kurbeltrieb (8) verbundene Preßplatte (6) durch die gestreckte Lage des Kurbeltriebs positioniert ist, über den die Preßplatte (6) in Schließstellung gegenüber dem Pressenrahmen bzw. Pressenständer abgestützt ist.

3. Presse nach Anspruch 1 oder 2, **dadurch gekennzeichnet, daß** der Kurzhubzylinder (17) von einem pneumatischen/hydraulischen Druckübersetzer versorgt ist.

4. Presse nach einem der vorhergehenden Ansprüche, **dadurch gekennzeichnet, daß** der Kurzhubzylinder (17) bei jedem Zyklus auf Endanschlag gefahren ist.

5. Presse nach einem der vorhergehenden Ansprüche, **dadurch gekennzeichnet, daß** die Stellspindel (15) eine digitale Positionsanzeige aufweist.

6. Presse nach einem der vorhergehenden Ansprüche, **dadurch gekennzeichnet, daß** die Stellspindel (15) manuell betätigbar ist.

7. Presse nach einem der vorhergehenden Ansprüche, **dadurch gekennzeichnet, daß** die Presse zwei gegenüberliegend angeordnete vertikale Ständer (1, 2) aufweist, die portalartig durch die Schlittenführung (3) miteinander verbunden sind, daß die beiden Preßplatten (6, 7) an den beiden Schlitten (4, 5) jeweils hängend angeordnet sind, und daß der Kurbeltrieb (8), die Stellspindel (15) und der Kurzhubzylinder (17) längs einer mit der Führung (3) parallelen Achse (19) ausgerichtet sind.

## Claims

1. Press for injection moulding ceramic articles, particularly items of crockery and the like, including press plates (6, 7), which are arranged opposed to one another and are movable relative to one another into the closed position along an axis (19) and which are arranged on respective carriages (4, 5), which (4, 5) are movable along a guide (3) parallel to the axis (19), characterised in that provided for the closure movement of the press there is a crank assembly (8), which is driven by an electric motor and whose connecting rod (13) engages one press plate (6) and that the other press plate (7) is movable by a positioning spindle (15), a short stroke cylinder (17) for producing the closing force of the press being arranged between the positioning spindle (15) and the associated press plate (7).

2. Press as claimed in Claim 1, characterised in that the press plate (6) connected to the crank assembly (8) is positioned in the closed position of the press by the extended position of the crank assembly, by means of which the press plate (6) is supported in the closed position with respect to the press frame or press stand.

3. Press as claimed in Claim 1 or 2, characterised in that the short stroke cylinder (17) is fed from a pneumatic-hydraulic pressure convertor.

4. Press as claimed in one of the preceding claims, characterised in that in each cycle the short stroke cylinder (17) is moved against an end stop.

5. Press as claimed in one of the preceding claims, characterised in that the positioning spindle (15) has a digital position indicator.

6. Press as claimed in one of the preceding claims, characterised in that the positioning spindle (15) is manually operable.

7. Press as claimed in one of the preceding claims, characterised in that the press has two opposed vertical stands (1, 2) which are connected together in the manner of a gantry by the carriage guide (3), that the two press plates (6, 7) are suspended on the two carriages (4, 5) and that the crank arrangement (8), the positioning spindle (15) and the short stroke cylinder (17) are aligned along an axis parallel to the guide (3).

## Revendications

1. Presse pour le moulage sous pression d'objets en céramique, notamment des pièces de vaisselle et des pièces similaires, avec des plateaux de serrage (6, 7) disposés de façon opposée et déplaçables en position de serrage de façon relative l'un par rapport à l'autre le long d'un axe (19), plateaux de serrage qui sont disposés à chaque fois sur un chariot (4, 5) qui peut être déplacé le long d'un guidage (3) parallèle à l'axe (19), caractérisée en ce qu'une commande à bielle (8) entraînée par un moteur électrique et dont la bielle motrice (13) mord sur un plateau de serrage (6) est prévue pour le mouvement d'avance de la presse, et en ce que l'autre plateau de serrage (7) peut être mû par une broche de réglage (15), un vérin à faible course (17) destiné à produire la force de serrage de la presse étant disposé entre la broche de réglage (15) et le plateau de serrage correspondant (7).

2. Presse selon la revendication 1, caractérisée en que, dans la position de serrage de la presse, le plateau de serrage (6) assemblé à la commande à bielle (8) est positionné de par la position allongée de la commande à bielle par l'intermédiaire de laquelle le plateau de serrage (6) est appuyé en position de serrage en face du cadre ou du montant de la presse.

3. Presse selon les revendications 1 ou 2, caractérisée en ce que le vérin à faible course (17) est alimenté par un dispositif multiplicateur de pression pneumatique/hydraulique.

4. Presse selon l'une des revendications précédentes, caractérisée en ce que le vérin à faible course (17) est amené à chaque cycle sur la butée de fin de course.

5. Presse selon l'une des revendications précédentes, caractérisée en ce que la broche de réglage (15) présente un affichage numérique de position.

6. Presse selon l'une des revendications précédentes, caractérisée en ce que la broche de réglage (15) peut être actionnée manuellement.

7. Presse selon l'une des revendications précédentes, caractérisée en ce que la presse présente deux montants (1, 2) verticaux disposés de façon opposée et qui sont assemblés l'un à l'autre à la façon d'un portique par le guidage du chariot (3), en ce que les deux plateaux de serrage (6, 7) sont suspendus à chaque fois aux deux chariots (4, 5), et en ce que la commande à bielle (8), la broche de réglage (15) et le vérin à faible course (17) sont alignés le long d'un axe (19) parallèle au guidage (3).
